# FASCICULE DE BREVET EUROPEEN

(11) **EP 2 036 796 B1**
(45) Date de publication et mention de la délivrance du brevet: **03.04.2013**
(21) Numéro de dépôt: 08164278.7
(22) Date de dépôt: 12.09.2008
(51) Int. Cl.: B60W 30/14, B60Q 1/52, G06T 7/00, H04N 13/02

(54) **Dispositif d'aide à la conduite pour véhicule automobile comportant un système de capture d'images stéréoscopique**
Hilfsvorrichtung zum Steuern eines Kraftfahrzeugs, die ein Stereo-Bilderfassungssystem umfasst
Automobile driving assistance device comprising a stereoscopic image capturing system

(30) Priorité: 17.09.2007 FR 0706533
(43) Date de publication de la demande: 18.03.2009
(73) Titulaire: Valeo Vision, 93012 Bobigny Cedex (FR)
(72) Inventeur: Robert, Caroline, 75011, PARIS (FR); Rebut, Julien, 75010, PARIS (FR)

(56) Documents cités:
- DE-A1- 10 343 406
- GB-A- 2 261 339
- US-A- 5 001 558
- US-A1- 2003 081 815
- US-A1- 2006 157 639
- US-A1- 2007 046 449
- US-A1- 2007 165 910

## Description

La présente invention a pour objet un dispositif d'aide à la conduite pour véhicule automobile comportant un système de capture d'images de type système stéréoscopique. Le dispositif d'aide à la conduite, et plus particulièrement le système de capture d'images stéréoscopique, est embarqué au sein d'un véhicule automobile. Le dispositif selon l'invention est destiné essentiellement à améliorer des fonctions d'aide à la conduite développées au sein des véhicules automobiles, tout en rendant disponible, de façon économique, une pluralité de ces fonctions ; par exemple, parmi ces fonctions, on peut citer une fonction de commutation automatique de faisceau, dite fonction BeamAtic (marque déposée), permettant le passage des feux de croisement aux feux de route, et vice-versa, en fonction des conditions de circulation.

Le domaine de l'invention est, d'une façon générale, celui des systèmes avancés d'aide à la conduite, et plus particulièrement celui de la détection et de la localisation d'obstacles, notamment de véhicules croisés ou suivis ; ce domaine constitue un des éléments clés et les plus étudiés dans le cadre des systèmes avancés d'aide à la conduite mis en oeuvre depuis une quinzaine d'années au sein de différents projets de recherche, notamment chez les constructeurs et équipementiers automobiles. Pour réaliser la détection et la localisation d'obstacles depuis un véhicule automobile, de nombreuses solutions ont été envisagées et utilisées, essentiellement basées sur des technologies radar, lidar, ultrasons pour les obstacles proches et à basse vitesse, et également sur des procédés faisant intervenir des dispositifs de type caméras.

Un tel dispositif est décrit selon le préambule de la revendication 1 dans le document US 2007/165910 A1.

Les capteurs de type radar et lidar, typiquement utilisés en application à détection lointaine comme l'ACC (pour Autonomous Cruise Control en langue anglaise) par exemple, fournissent directement une information de position et parfois de vitesse 3D des objets présents dans la scène. Cette information permet de segmenter les différents objets présents et de leur attribuer des informations utiles comme leur position, éventuellement leur vitesse, avec leurs coordonnées réelles en trois dimensions, par rapport au véhicule équipé du capteur considéré, et par rapport à un repère fixe, si la position du véhicule est bien déterminée dans ce repère.

Mais de tels capteurs n'offrent pas de champ de vision large, et leur positionnement angulaire n'est jamais très précis. Par ailleurs, de tels capteurs n'apportent aucune information sur l'environnement routier, telle que la position de véhicule sur sa voie, le nombre de voies, la trajectoire de la route, la classification des obstacles, la possibilité de reconnaître des éléments de l'infrastructure tels que les panneaux... De plus, de tels capteurs longue portée à champ étroit ne peuvent discerner suffisamment tôt les scénarios dits de cut-in, où un véhicule provenant d'une autre voie de circulation que celle du véhicule porteur vient s'intercaler devant celui-ci, et le conducteur doit savoir que la tâche de gérer un tel scénario lui incombe.

Les méthodes de détection d'obstacles utilisant des caméras embarquées à bord du véhicule permettent de répondre à ces attentes, qui ne sont pas satisfaites par les radars ou lidars. L'information fournie par la caméra est une image bidimensionnelle (2D), résultant généralement d'une projection de type perspective du monde réel tridimensionnel (3D) vers le plan image.

Les méthodes utilisables pour la détection d'obstacles par caméra se regroupent en trois catégories principales : la reconnaissance de forme en deux dimensions, la récupération de l'information trois dimensions par une interprétation du mouvement en monovision - c'est-à-dire du mouvement perçu par une unique caméra -, et la triangulation en stéréovision. Cette dernière catégorie est la plus satisfaisante en terme de qualité de résultats obtenus, car elle fournit une information assez précise de la distance d'un obstacle.

Par ailleurs, parmi les capteurs de type caméras utilisés jusqu'à présent à bord des véhicules automobiles pour réaliser des fonctions d'aide à la conduite, on peut distinguer deux familles principales, avec leurs avantages et inconvénients :
- les caméras en niveaux de gris, parfois désignées comme caméra noir et blanc ;
- les caméras couleur.

Une caméra couleur permet notamment de simplifier la discrimination et la reconnaissance de feux arrière, et ainsi d'en augmenter la portée de détection grâce à l'information couleur. De manière classique, ce type de caméra est une caméra en niveau de gris devant laquelle est placé un filtre, appelé filtre de Bayer, qui permet de calculer les composantes rouge, verte et bleu (composantes RVB, encore couramment appelées composantes RGB) de chaque image capturée. Or de tels filtres utilisés devant les caméras dégradent la résolution spatiale du capteur utilisé. En conséquence, l'estimation de la distance - souvent réalisée en mesurant l'écart entre deux dispositifs projecteurs d'un véhicule détecté - obtenue au moyen d'un unique capteur couleur est moins précise que celle réalisée au moyen d'un unique capteur en niveaux de gris ; or une telle information est primordiale dans certaines applications d'aide à la conduite, notamment la fonction BeamAtic (marque déposée), car l'opération de déclenchement de la commutation des faisceaux dépend directement de la distance à laquelle sont détectés les véhicules suivis ou croisés. Cependant au-delà d'une certaine distance, un capteur niveaux de gris ne permet pas de distinguer les deux feux arrières d'un véhicule l'un de l'autre, et ne disposant pas de l'information couleur, il ne permet pas la détection des feux arrière. Dans les capteurs niveaux de gris couramment utilisés à l'heure actuelle, cette distance limite est de 450 mètres. Le choix entre capteur couleur et capteur de niveaux de gris est donc un compromis entre la portée de détection et la précision de l'estimation de la distance.

L'utilisation de systèmes de vision stéréoscopique, que les deux caméras utilisées soient des caméras niveaux de gris ou des caméras couleur, permet d'estimer de façon précise la distance d'objets détectés, et donc de réaliser de manière satisfaisante la fonction BeamAtic. D'une manière générale, certaines fonctions nécessiteront d'avoir une résolution d'un niveau plus élevé que d'autres ou d'avoir un champ de vision moins large. Mais la présence de deux caméras pour une fonction dédiée représente un coût important qui rend une telle solution souvent rédhibitoire.

L'objet de l'invention propose une solution aux problèmes qui viennent d'être exposés. Dans l'invention, on propose toujours l'utilisation d'un système stéréoscopique de capture d'images dans le cadre d'un dispositif d'aide à la conduite, mais en réalisant ce système de telle sorte qu'il offre une réelle multifonctionnalité en terme d'applications d'aide à la conduite qu'il rend possible. En privilégiant ainsi la multifonctionnalité, on silmplifie l'intégration dans le véhicule des différents équipements nécessaires aux systèmes d'aide à la conduite, on limite l'espace occupé au niveau du pare-brise, on réduit les coûts et la complexité des liaisons... A cet effet, on propose dans l'invention, que le dispositif d'aide à la conduite réalisé fasse intervenir un système stéréoscopique comportant deux caméras de champs de vision différents , cumulant ainsi les avantages des deux systèmes de capture d'images. Présentement, il s'agit d'une caméra de type niveaux de gris et d'une caméra de type couleur, permettant ainsi de mettre en oeuvre davantage de fonctions.

L'invention concerne donc essentiellement un dispositif d'aide à la conduite pour véhicule automobile comportant notamment un système de capture d'images, dans lequel le système de capture d'images comporte un système stéréoscopique de capture d'images comportant au moins une première caméra et une deuxième caméra, la première caméra présentant un champ de vision supérieur au champ de vision de la deuxième caméra, le système stéréoscopique conférant ainsi une multifonctionnalité au dispositif d'aide à la conduite.

La deuxième caméra permet ainsi notamment de saisir une image sur une zone équivalente à une portion de l'image saisie par la première caméra, ce qui permet de bénéficier d'un effet de zoom dans la deuxième image.

Outre les caractéristiques principales qui viennent d'être mentionnées dans le paragraphe précédent, le dispositif selon l'invention peut présenter une ou plusieurs caractéristiques supplémentaires parmi les suivantes :
- la première caméra et la deuxième caméra présentent une zone de recouvrement de leur champ de vision, ladite zone de recouvrement étant globalement centrée sur une direction de déplacement du véhicule automobile ;
- la première caméra est du type caméra en niveaux de gris et la deuxième caméra du type caméra couleur; ainsi la deuxième caméra offre en plus une information sur la couleur des objets détectés ;
- le champ de vision de la première caméra est compris entre 30 degrés et 50 degrés, notamment 40 degrés, et en ce que le champ de vision de la deuxième caméra est compris entre 15 degrés et 25 degrés, notamment 20 degrés ;
- la valeur du champ de vision de la première caméra est un multiple de la valeur du champ de vision de la deuxième caméra ;
- le champ de vision de la première caméra et le champ de vision de la deuxième caméra sont globalement centrés sur une direction de déplacement du véhicule automobile ;
- la deuxième caméra est équipée d'un capteur de type RGBi ou d'un capteur permettant la capture de l'image en niveau de gris associée au calcul des composantes rouges de l'image capturée, tel qu'un capteur du type RedClear.

Comme pour les capteurs de type RGB, les capteurs de type RGBi et les capteurs de type RedClear, fonctionnent au moyen d'un capteur de niveau de gris devant lequel est placé un filtre, permettant, dans le cas du capteur de type RGBi, le calcul des composantes rouges, vertes, bleus et infrarouges de l'image capturée, et dans le cas du capteur de type RedClear, la capture de l'image en niveau de gris associée au calcul des composantes rouges de l'image capturée. L'avantage des capteurs de type Red Clear est qu"il permet d'avoir l'information couleur intéressante (le rouge pour les feux arrières) et en plus d'avoir une résolution supérieure à celle d'un capteur RGB ou d'un capteur RGBi

Les différentes caractéristiques supplémentaires du dispositif selon l'invention, dans la mesure où elles ne s'excluent pas mutuellement, sont combinées selon toutes les possibilités d'association pour aboutir à différents exemples de réalisation de l'invention.

La présente invention se rapporte également à un procédé de capture d'image stéréoscopique utilisant un dispositif selon la présente invention, comprenant les étapes suivantes :
- capture d'au moins une première image avec ladite première caméra,
- capture de la deuxième image avec ladite deuxième caméra,
- mise en correspondance de la première image et de la deuxième image.

Préférentiellement dans ce procédé, l'étape de mise en correspondance de la première image et de la deuxième image comprend les sous-étapes suivantes :
- extraction de la portion de la première image correspondant à la deuxième image en pleine résolution, et
- extraction d'une troisième image de la deuxième image, ladite troisième image correspondant à la deuxième image sous-échantillonnée, de manière que la troisième image et la portion de la première image présentent, en pixels, les mêmes dimensions, le couple d'images ainsi obtenu permettant de réaliser la mise en correspondance.

La présente invention se rapporte également à un véhicule automobile équipé d'un dispositif d'aide à la conduite selon l'invention, avec ses caractéristiques principales et éventuellement une ou plusieurs caractéristiques supplémentaires qui viennent d'être évoquées.

L'invention et ses différentes applications seront mieux comprises à la lecture de la description qui suit et à l'examen des figures qui l'accompagnent.

Celles-ci ne sont présentées qu'à titre indicatif et nullement limitatif de l'invention. Les figures montrent :
- à la figure 1, une représentation schématique d'un exemple d'utilisation du dispositif selon l'invention ;
- à la figure 2, une représentation schématique d'une exploitation réalisée sur des images capturées par le dispositif selon l'invention.

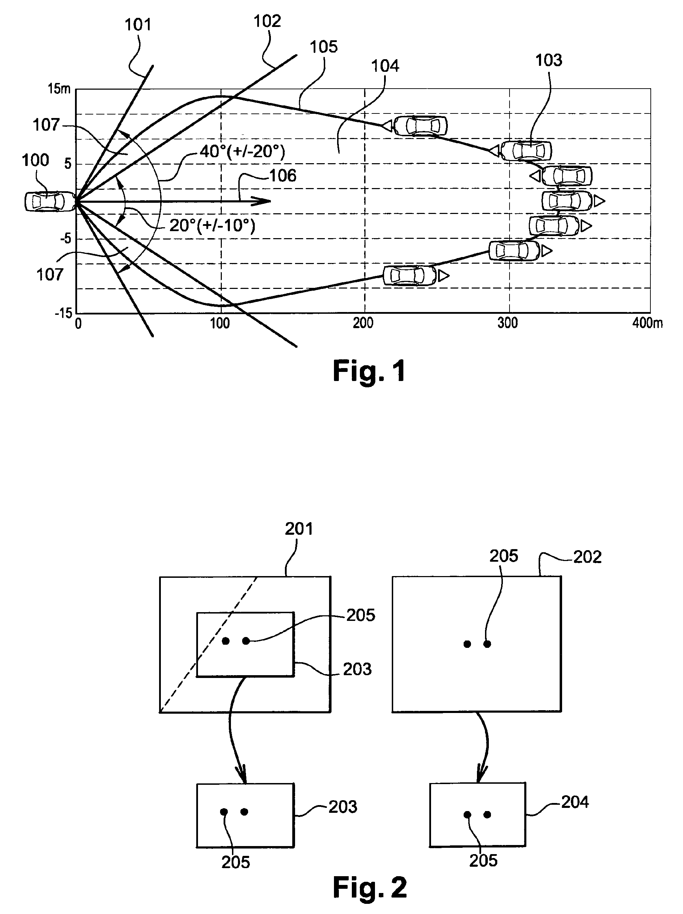

La figure 1 montre un véhicule 100 équipé du dispositif selon l'invention. Ce dernier est constitué au moins d'une première caméra de type caméra en niveaux de gris, qui ne fournit donc pas d'information couleur, et d'une deuxième caméra de type caméra couleur. Dans l'exemple représenté, la première caméra présente un premier champ de vision 101, défini par un angle de vue, centré sur la direction de déplacement du véhicule 100, et dont la valeur est de l'ordre de 40 degrés. La deuxième caméra présente un deuxième champ de vision 102, également centré sur la direction 106 de déplacement du véhicule 100, de valeur moins importante que le premier champ de vision, par exemple de l'ordre de 20 degrés. Avantageusement, le deuxième champ de vision contient l'ensemble d'une zone d'éblouissement 105, correspondant à une zone dans laquelle tout véhicule 103 présent risque d'être ébloui si le véhicule 100 utilise ses feux de route. Les deux champs de vision présentent donc une zone de recouvrement 104, pour laquelle des images peuvent être acquises par la première et par la deuxième caméra, permettant notamment, dans cette zone, de réaliser une vision stéréoscopique. Tout véhicule 103 croisé ou suivi se trouvant dans un des champs de vision sera donc détecté et les informations de détection obtenues pourront donc faire l'objet d'au moins un traitement spécifique à une fonction d'aide à la conduite.

Un tel dispositif permet notamment de réaliser les fonctions d'aide à la conduite suivante :
- des fonctions mono caméra connues sous les appellations LDWS, BeamAtic, FPW ..., qui nécessitent un angle de vue suffisamment large pour couvrir trois voies et également pour être capable de fournir des images dans les virages. Typiquement, l'angle de vue utilisé pour ces fonctions est de 40 degrés. Pour ce type de fonctions, c'est l'utilisation de la caméra de type caméra en niveaux de gris qui est privilégiée. La disposition d'un angle large, par exemple 40 degrés, mais d'autres valeurs, entre 30 et 50 degrés, sont également utilisées, permet de bénéficier d'un champ de vision large qui peut renseigner sur la voie de circulation empruntée par le véhicule, et sur les deux voies adjacentes. Un champ de 40 degrés est également nécessaire dans le cas de dépassements, de situations en virage et également pour détecter les lampadaires.
- des fonctions mono caméra, telles que la Night Vision (vision de nuit) ou la détection de piétons, requièrent une meilleure résolution au niveau des objets éloignés, ce qui implique donc un angle de vue plus étroit, généralement 20 degrés. Pour ce type de fonctions, c'est l'utilisation de la caméra de type caméra couleur qui est privilégiée. Par ailleurs, l'utilisation de la caméra couleur permet une amélioration de l'échelle de détection des feux arrière.
- toute fonction qui nécessite une estimation relativement précise d'objects détectés ; le dispositif selon l'invention permet, grâce à la présence d'un système stéréoscopique, de réaliser ces fonctions. Une de ces fonctions est par exemple la fonction de réglage progressif de la portée du faisceau lumineux de type code en fonction de la présence des autres véhicules.

La figure 2 illustre plus particulièrement l'utilisation du dispositif selon l'invention pour réaliser une estimation de distance d'un obstacle de manière précise.

La caméra en niveaux de gris permet de détecter tout type d'objet sur une plage de distance allant de 0 mètre à la distance maximale de détection associée à ladite caméra, avec une limitation au niveau des feux arrière à longue distance. A ces distances éloignées, le faisceau route du véhicule 100 est éblouissant uniquement lorsque l'obstacle potentiel est globalement aligné avec le véhicule 100. Dans un tel cas, l'obstacle apparaît dans une première image 201 générée par la première caméra, et dans une deuxième image 202 générée par la deuxième caméra, car il est nécessairement présent dans la zone de recouvrement 104.

Ainsi, la détection d'un objet, deux feux 205 de véhicule dans l'exemple illustré, dans la première image est validée dans la deuxième image 202, qui permet de bénéficier d'un effet de zoom dans la deuxième image 202, sur une zone équivalente à une portion 203 de la première image 201, en offrant en plus une information sur la couleur des objets détectés.

A ces distances importantes, les moyens classiques d'estimation de distance (position verticale, triangulation à partir de la largeur du véhicule) fournissent des résultats de faible précision. Dans le dispositif selon l'invention, le principe de stéréovision est utilisé pour estimer la distance de l'obstacle. Le principe de stéréovision est applicable à tout objet détecté dans la zone de recouvrement 104. Tout object détecté dans cette zone est présent sur la première image 201 et sur la deuxième image 202, qui sont alors mises en correspondance. Pour réaliser une telle mise en correspondance, on propose, dans l'invention, d'extraire la portion 203 de la première image 201 ; la portion 203 correspond à la deuxième image 202 en pleine résolution. Pour la mise en équivalence, on extrait de la deuxième image 202 une image 204 correspondant à la deuxième image 202 sous-échantillonnée, de manière que l'image 204 et la portion 203 présentent, en pixels, les mêmes dimensions. Le couple d'images ainsi obtenu permet de réaliser la mise en correspondance. La précision du système de vision stéréoscopique du dispositif selon l'invention, bien que réalisé avec deux caméras 40°/20°, est la même qu'un système de stéréovision réalisé avec deux caméras 40°/40°.

Une zone particulière, dite zone de proximité 107, visible à la figure 1, est utilisée pour détecter les obstacles dans le cas de dépassements, croisements en virage. A ces courtes distances, les principes classiques d'estimation de distance mono caméra fournissent une précision suffisante.

Avantageusement, dans l'invention, la caméra en niveaux de gris et la caméra couleur utilisent des capteurs identiques, en terme de résolution, notamment ; cependant, dans certains exemples de réalisation, des capteurs de type différents peuvent être utilisés.

Dans certains modes de mise en oeuvre du dispositif selon l'invention, on propose d'utiliser une caméra couleur de type RGBi, pour laquelle un nombre importants de pixels du capteur sont sensibles aux rayons infrarouges ; certaines fonctions, notamment liées à la vision de nuit, sont ainsi encore plus performantes.

L'exemple décrit n'est pas limitatif. Par exemple, selon les mêmes principes, on peut utiliser deux caméras en niveau de gris de champs de vision différents, pour mettre en oeuvre deux fonctions différentes nécessitant des résolutions et des champs de vision différents (bien évidemment dans ce cas, les fonctions ne seront pas basées sur une détection de couleur).

## Revendications

1. Dispositif d'aide à la conduite pour véhicule automobile (100) comportant notamment un système de capture d'images, en ce que le système de capture d'images comporte un système stéréoscopique de capture d'image comportant au moins une première caméra et une deuxième caméra, ladite première caméra présentant un champ de vision (101) supérieur au champ de vision (102) de ladite deuxième caméra, **caractérisé en ce que** le système stéréoscopique de capture d'image avec une caméra de type niveaux de gris et une caméra de type couleur étant réalisé de telle sorte qu'il offre une réelle multifonctionnalité en terme d'applications d'aide à la conduite qu'il rend possible, ledit système stéréoscopique conférant ainsi ladite multifonctionnalité au dit dispositif d'aide à la conduite.

2. Dispositif selon la revendication précédente **caractérisé en ce que** la première caméra et la deuxième caméra présentent une zone de recouvrement (104) de leur champ de vision, ladite zone de recouvrement étant globalement centrée sur une direction (106) de déplacement du véhicule automobile (100).

3. Dispositif selon l'une au moins des revendications précédentes **caractérisé en ce que** la première caméra est du type caméra en niveaux de gris et la deuxième caméra du type caméra couleur.

4. Dispositif selon l'une au moins des revendications précédentes **caractérisé en ce que** le champ de vision (101) de la première caméra est compris entre 30 degrés et 50 degrés, notamment 40 degrés, et **en ce que** le champ de vision (102) de la deuxième caméra est compris entre 15 degrés et 25 degrés, notamment 20 degrés.

5. Dispositif selon l'une au moins des revendications précédentes **caractérisé en ce que** la valeur du champ de vision (101) de la première caméra est un multiple de la valeur du champ de vision (102) de la deuxième caméra.

6. Dispositif selon l'une au moins des revendications précédentes **caractérisé en ce que** le champ de vision (101) de la première caméra et le champ de vision (102) de la deuxième caméra sont globalement centrés sur une direction (106) de déplacement du véhicule automobile

7. Dispositif selon l'une au moins des revendications précédentes **caractérisé en ce que** la deuxième caméra est équipée d'un capteur de type RGBi ou d'un capteur permettant la capture de l'image en niveau de gris associée au calcul des composantes rouges de l'image capturée, tel qu'un capteur du type RedClear.

8. Procédé de capture d'image stéréoscopique utilisant un dispositif selon l'une quelconque des revendications 1 à 7, comprenant les étapes suivantes :
- capture d'au moins une première image avec ladite première caméra,
- capture de la deuxième image avec ladite deuxième caméra,
- mise en correspondance de la première image et de la deuxième image.

9. Procédé selon la revendication 8, **caractérisé en ce que** ladite étape de mise en correspondance de la première image et de la deuxième image comprend les sous-étapes suivantes :
- extraction de la portion (203) de la première image (201) correspondant à la deuxième image (202) en pleine résolution, et
- extraction d'une troisième image (204) de la deuxième image (202), ladite troisième image (204) correspondant à la deuxième image (202) sous-échantillonnée, de manière que la troisième image (204) et la portion (203) de la première image (201) présentent, en pixels, les mêmes dimensions, le couple d'images ainsi obtenu permettant de réaliser la mise en correspondance.

10. Véhicule automobile (100) **caractérisé en ce qu'**il est équipé d'un dispositif d'aide à la conduite selon l'une au moins des revendications précédentes.

## Claims

1. Device intended to support the driving of a motor vehicle (100) in particular comprising a system for the capture of images, wherein the system for the capture of images includes a stereoscopic system for the capture of images comprising at least a first camera and a second camera, said first camera having a field of vision (101) greater than the field of vision (102) of said second camera, **characterized in that** the stereoscopic system for the capture of images with a grey levels camera type and a colour camera type is designed so that it offers a real degree of multifunctionality in terms of driving support applications which it renders possible, said stereoscopic system thereby conferring said multifunctionality on said device for driving support.

2. Device according to the above claim, **characterized in that** the first camera and the second camera have an overlapping zone (104) in their fields of vision, said overlapping zone being generally centered on a direction (106) in which the motor vehicle (100) is travelling.

3. Device according to at least one of the above claims, **characterized in that** the first camera is of the grey levels camera type and the second camera is of the colour camera type.

4. Device according to at least one of the above claims, **characterized in that** the field of vision (101) of said first camera is between 30 degrees and 50 degrees, in particular 40 degrees, while said field of vision (102) of said second camera is between 15 degrees and 25 degrees, in particular 20 degrees.

5. Device according to at least one of the above claims, **characterized in that** the size of said field of vision (101) of said first camera is a multiple of the size of the field of vision (102) of said second camera.

6. Device according to at least one of the above claims, **characterized in that** the field of vision (101) of said first camera and the field of vision (102) of said second camera are generally centered on a direction (106) of travel of the motor vehicle

7. Device according to at least one of the above claims, **characterized in that** said second camera is fitted with a sensor of the RGBi type or a sensor enabling an image to be captured in grey levels associated with the calculation of the red components of the captured image, such as a sensor of the RedClear type.

8. Process for capturing a stereoscopic image using a device according to any one of claims 1 to 7, comprising the following steps:
- capture of at least a first image using said first camera,
- capture of a second image using said second camera,
- matching of said first image and said second image.

9. Process according to claim 8, **characterized in that** said step of matching of said first and second images comprises the following sub-steps:
- extraction of the portion (203) from said first image (201) that corresponds to said second image (202) in its full resolution, and
- extraction of a third image (204) from said second image (202), said third image (204) corresponding to said sub-sampled second image (202) in such a way that said third image (204) and said portion (203) from said first image (201) present, in pixels, the same dimensions, with the pair of images obtained in this manner permitting the matching arrangement to be achieved.

10. Motor vehicle (100) **characterized in that** it is fitted with a device intended to support driving according to at least one of the above claims.

## Patentansprüche

1. Fahrerassistenzvorrichtung für Kraftfahrzeuge (100) insbesondere mit einem Bilderfassungssystem, wobei das Bilderfassungssystem ein stereoskopisches Bilderfassungssystem mit wenigstens einer ersten Kamera und einer zweiten Kamera umfasst, wobei die erste Kamera ein Sichtfeld (101) aufweist, das größer ist als das Sichtfeld (102) der zweiten Kamera,
**dadurch gekennzeichnet, dass** das stereoskopische Bilderfassungssystem mit einer Grauwertkamera und einer Farbkamera so ausgeführt ist, dass es eine wirkliche Multifunktionalität hinsichtlich der von ihm ermöglichten Fahrerassistenzanwendungen bietet, wobei das stereoskopische System der Fahrerassistenzvorrichtung somit diese Multifunktionalität verleiht.

2. Vorrichtung nach dem vorhergehenden Anspruch,
**dadurch gekennzeichnet, dass** die erste Kamera und die zweite Kamera einen Überlappungsbereich (104) ihres Sichtfeldes aufweisen, wobei der Überlappungsbereich allgemein auf eine Fahrtrichtung (106) des Kraftfahrzeugs (100) zentriert ist.

3. Vorrichtung nach wenigstens einem der vorhergehenden Ansprüche,
**dadurch gekennzeichnet, dass** die erste Kamera vom Typ Grauwertkamera und die zweite Kamera vom Typ Farbkamera ist.

4. Vorrichtung nach wenigstens einem der vorhergehenden Ansprüche,
**dadurch gekennzeichnet, dass** das Sichtfeld (101) der ersten Kamera zwischen 30 Grad und 50 Grad, insbesondere bei 40 Grad beträgt, und dass das Sichtfeld (102) der zweiten Kamera zwischen 15 Grad und 25 Grad, insbesondere bei 20 Grad beträgt.

5. Vorrichtung nach wenigstens einem der vorhergehenden Ansprüche,
**dadurch gekennzeichnet, dass** der Wert des Sichtfelds (101) der ersten Kamera ein Vielfaches des Wertes des Sichtfelds (102) der zweiten Kamera ist.

6. Vorrichtung nach wenigstens einem der vorhergehenden Ansprüche,
**dadurch gekennzeichnet, dass** das Sichtfeld (101) der ersten Kamera und das Sichtfeld (102) der zweiten Kamera allgemein auf eine Fahrtrichtung (106) des Kraftfahrzeugs zentriert sind.

7. Vorrichtung nach wenigstens einem der vorhergehenden Ansprüche,
**dadurch gekennzeichnet, dass** die zweite Kamera mit einem RGBi-Sensor ausgestattet ist oder mit einem Sensor, der das Erfassen des Bildes in Grauwerten in Verbindung mit der Berechnung der roten Farbkomponenten des erfassten Bildes erlaubt, wie zum Beispiel ein Sensor vom Typ RedClear.

8. Verfahren zur stereoskopischen Bilderfassung, das eine Vorrichtung nach einem der Ansprüche 1 bis 7 verwendet und die folgenden Schritte umfasst:
- Erfassen wenigstens eines ersten Bildes mit der ersten Kamera;
- Erfassen des zweiten Bildes mit der zweiten Kamera;
- Korrespondenzzuordnung des ersten Bildes und des zweiten Bildes.

9. Verfahren nach Anspruch 8,
**dadurch gekennzeichnet, dass** der Schritt der Korrespondenzzuordnung des ersten Bildes und des zweiten Bildes die folgenden Unterschritte umfasst:
- Entnehmen des Teils (203) des ersten Bildes (201), der mit dem zweiten Bild (202) in voller Auflösung korrespondiert, und
- Entnehmen eines dritten Bildes (204) aus dem zweiten Bild (202), wobei das dritte Bild (204) dem unterabgetasteten zweiten Bild (202) entspricht, so dass das dritte Bild (204) und der Teil (203) des ersten Bildes (201) pixelmäßig die gleiche Größe aufweisen, wobei das so erhaltene Bilderpaar die Korrespondenzzuordnung vorzunehmen erlaubt.

10. Kraftfahrzeug (100),
**dadurch gekennzeichnet, dass** es mit einer Fahrerassistenzvorrichtung nach einem der vorhergehenden Ansprüche ausgestattet ist.
